# EUROPEAN PATENT APPLICATION

(11) **EP 4 335 882 A1**
(43) Date of publication of application: **13.03.2024**
(21) Application number: 22798864.9
(22) Date of filing: 07.04.2022
(51) Int. Cl.: C08F 214/18, C09K 3/18

(54) **WATER/OIL REPELLING AGENT COMPOSITION, METHOD FOR PRODUCING WATER/OIL REPELLING AGENT COMPOSITION, AND ARTICLE**

(30) Priority: 07.05.2021 JP 2021079004
(71) Applicant: AGC INC., Chiyoda-ku, Tokyo 1008405 (JP)
(72) Inventor: KAMIJO Yuzuka, Tokyo 100-8405 (JP); HARA Hiroyuki, Tokyo 100-8405 (JP)
(74) Representative: Müller-Boré & Partner Patentanwälte PartG mbB
(86) International application number: PCT/JP2022/017232
(87) International publication number: WO 2022/234757

(57) **Abstract**

The present invention relates to a water and oil repellent composition from which an article with excellent water repellency can be obtained; a method for producing the same; and an article treated with the water and oil repellent composition.

The water and oil repellent composition of the present invention comprises a polymer in which the total ratio of a unit (a) based on a monomer (a), a unit (b) based on a monomer (b) and a unit (c) based on a monomer (c) with respect to all units is 95 mol% or more; in the production method of the present invention, a monomer component in which the total ratio of the monomer (a), the monomer (b) and the monomer (c) is 95 mol% or more is polymerized in the presence of a polymerization initiator;
monomer (a): CR¹R²=CR³R⁴;
monomer (b): CH₂=CH-R^{f};
monomer (c): a carboxylic acid vinyl ester;
R¹: F, Cl or H;
R²: F or H;
R³: F or H;
R⁴: F, H or CF₃;
at least one of R¹ to R⁴ is F;
R^{f}: a perfluoroalkyl group having 1 to 6 carbon atoms.

## Description

### [Technical Field]

The present invention relates to a water and oil repellent composition, a method for producing a water and oil repellent composition, and an article.

### [Background Art]

As a method of imparting water and oil repellency to the surface of an article such as a fiber product, a method of treating the article with a water and oil repellent composition comprising a fluorine-containing polymer having a unit based on (perfluoroalkyl) ethylene has been known (Patent Document 1).

### [Citation List]

### [Patent Documents]

[Patent Document 1] International Patent Publication No. 2019/138680

### [Summary of Invention]

### [Technical Problem]

However, according to the intensive studies by the inventors of the present invention, articles treated with the water and oil repellent composition comprising a fluorine-containing polymer described in Patent Document 1 may not have sufficient water repellency.

The present invention provides a water and oil repellent composition from which an article with excellent water repellency can be obtained, a method for producing the same, and an article with excellent water repellency.

### [Solution to Problem]

The present invention has the following aspects.
[1] A water and oil repellent composition comprising a polymer comprising a unit based on the following monomer (a), a unit based on the following monomer (b), and a unit based on the following monomer (c);
   wherein a total ratio of the unit based on the monomer (a), the unit based on the monomer (b), and the unit based on the monomer (c) with respect to all the units that constitute the polymer is 95 mol% or more,
   monomer (a): a compound represented by the following formula (1),

      CR¹R²=CR³R⁴ Formula (1),
   wherein in Formula (1), R¹ is F, Cl or H, R² is F or H, R³ is F or H, R⁴ is F, H or CF₃, and at least one of R¹ to R⁴ is F,
   monomer (b): a compound represented by the following formula (2),

      CH₂=CH-R^{f} Formula (2),
   wherein in Formula (2), R^{f} is a perfluoroalkyl group having 1 to 6 carbon atoms,
   monomer (c): a carboxylic acid vinyl ester.
[2] The water and oil repellent composition according to [1], wherein the polymer further comprises a unit based on the following monomer (d),
   monomer (d): another monomer copolymerizable with the monomer (a), the monomer (b) and the monomer (c).
[3] The water and oil repellent composition according to [1] or [2], wherein a total ratio of the unit based on the monomer (b) and the unit based on the monomer (c) with respect to all the units that constitute the polymer is 85 mol% or more and 99 mol% or less.
[4] The water and oil repellent composition according to any one of [1] to [3], wherein a molar ratio of (the unit based on the monomer (b))/(the unit based on the monomer (c)) is 0.20 or more and 0.80 or less.
[5] The water and oil repellent composition according to any one of [1] to [4], wherein a ratio of the unit based on the monomer (a) with respect to all the units that constitute the polymer is 1 mol% or more and 12 mol% or less.
[6] The water and oil repellent composition according to any one of [1] to [5], wherein the monomer (a) is at least one selected from the group consisting of tetrafluoroethylene, trifluoroethylene, chlorotrifluoroethylene and hexafluoropropylene.
[7] A method for producing a water and oil repellent composition, the method comprising polymerizing a monomer component in the presence of a polymerization initiator; wherein the monomer component comprises the following monomer (a), the following monomer (b), and the following monomer (c); and a total ratio of the monomer (a), the monomer (b), and the monomer (c) with respect to the monomer component is 95 mol% or more,
   monomer (a): a compound represented by the following formula (1),

      CR¹R²=CR³R⁴ Formula (1),
   wherein in Formula (1), R¹ is F, Cl or H, R² is F or H, R³ is F or H, R⁴ is F, H or CF₃, and at least one of R¹ to R⁴ is F,
   monomer (b): a compound represented by the following formula (2),

      CH₂=CH-R^{f} Formula (2),
   wherein in Formula (2), R^{f} is a perfluoroalkyl group having 1 to 6 carbon atoms,
   monomer (c): a carboxylic acid vinyl ester.
[8] The method according to [7], wherein the monomer component further comprises the following monomer (d),
   monomer (d): another monomer copolymerizable with the monomer (a), the monomer (b) and the monomer (c).
[9] The method according to [7] or [8], wherein a total ratio of the monomer (b) and the monomer (c) with respect to the monomer component is 85 mol% or more and 99 mol% or less.
[10] The method according to any one of [7] to [9], wherein a molar ratio of (the monomer (b))/(the monomer (c)) is 0.20 or more and 0.80 or less.
[11] The method according to any one of [7] to [10], wherein a ratio of the monomer (a) with respect to the monomer component is 1 mol% or more and 12 mol% or less.
[12] An article treated with the water and oil repellent composition according to any one of [1] to [6].

### [Effects of Invention]

According to the water and oil repellent composition of the present invention, an article with excellent water repellency can be obtained.

According to the method for producing a water and oil repellent composition of the present invention, it is possible to produce a water and oil repellent composition from which an article with excellent water repellency can be obtained.

The article of the present invention has excellent water repellency.

### [Description of Embodiments]

The meanings and definitions of the terms used in the present invention are as follows.

A "unit based on a monomer" is a generic term for an atomic group formed directly by polymerization of one molecule of the monomer, and an atomic group obtained by chemically converting a portion of this directly formed atomic group.

A "(meth)acrylate" is a generic term for an acrylate and a methacrylate. Similarly, a "(meth)acryloyloxy group" is a generic term for an acryloyloxy group and a methacryloyloxy group.

The number average molecular weight (hereinafter also referred to as "Mn") and mass average molecular weight (hereinafter also referred to as "Mw") of a polymer are polymethyl methacrylate equivalent molecular weights obtained through measurement by gel permeation chromatography (hereinafter also referred to as "GPC") using a calibration curve produced using a standard polymethyl methacrylate sample.

A solid content concentration is calculated by a formula: (solid content mass) / (sample mass) × 100 by taking the mass of a sample before heating as the sample mass, and the mass of the sample after drying for 4 hours in a convective dryer at 120°C as the solid content mass.

"To" indicating a numerical range means that the numerical values before and after it are included as lower and upper limit values.

The numerical ranges for the amount and various property values disclosed in the present specification can be set to new numerical ranges by optionally combining the lower limit values and upper limit values thereof.

### [Water and oil repellent composition]

The water and oil repellent composition of the present invention (hereinafter also referred to as "the present composition") comprises a specific polymer (hereinafter also referred to as a "polymer (A)").

The present composition typically comprises the polymer (A) and a medium. Examples of the medium include an aqueous medium and an organic solvent. As the medium, an aqueous medium is preferred.

The present composition may further comprise a surfactant, if necessary.

The present composition may further comprise another component, if necessary.

The present composition is preferably a fluorine-containing polymer dispersion comprising the polymer (A), an aqueous medium and a surfactant. The fluorine-containing polymer dispersion includes a dispersion obtained by the production method described later. Further, the fluorine-containing polymer dispersion also includes a dispersion further diluted with any aqueous medium for treating an article.

The present composition may be a fluorine-containing polymer solution that comprises the polymer (A) and an organic solvent but does not comprise a surfactant.

### (Polymer (A))

The polymer (A) comprises a unit based on a monomer (a) (hereinafter also referred to as a "unit (a)"), a unit based on a monomer (b) (hereinafter also referred to as a "unit (b)"), and a unit based on a monomer (c) (hereinafter also referred to as a "unit (c)").

The polymer (A) may further have a unit based on a monomer (d) (hereinafter also referred to as a "unit (d)"), if necessary.
monomer (a): a compound represented by the following formula (1)

CR¹R²=CR³R⁴ Formula (1)

In the Formula (1), R¹ is F, Cl or H, R² is F or H, R³ is F or H, R⁴ is F, H or CF₃, and at least one of R¹ to R⁴ is F.
monomer (b): a compound represented by the following formula (2)

CH₂=CH-R^{f} Formula (2)

In the Formula (2), R^{f} is a perfluoroalkyl group having 1 to 6 carbon atoms.
monomer (c): a carboxylic acid vinyl ester.
monomer (d): another monomer copolymerizable with the monomer (a), the monomer (b) and the monomer (c).

Examples of the monomer (a) include tetrafluoroethylene, trifluoroethylene, chlorotrifluoroethylene (hereinafter also referred to as "CTFE"), hexafluoropropylene, vinylidene fluoride, vinyl fluoride, and 2,2,3,3-tetrafluoropropene.

As the monomer (a), at least one selected from the group consisting of tetrafluoroethylene, trifluoroethylene, CTFE and hexafluoropropylene are preferred from the viewpoint that the conversion rate to the polymer (A) tends to be favorable, and in view of the availability of raw materials and the ease of handling, and CTFE is particularly preferred from the viewpoint of favorable adhesion between the present composition and an article to be treated with the present composition.

A single type of the monomer (a) may be used alone, or two or more types thereof may be used in combination.

In the monomer (b), the number of carbon atoms in R^{f} is from 1 to 6, preferably from 4 to 6, and particularly preferably 4, from the viewpoint that the conversion rate to the polymer (A) tends to be favorable, and in view of the availability of raw materials and the ease of handling.

R^{f} is preferably linear.

Examples of the monomer (b) include CH₂=CH-CF₃, CH₂=CH-CF₂CF₃, CH₂=CH-CF₂CF₂CF₃, CH₂=CH-CF(CF₃)₂, CH₂=CH-(CF₂)₃CF₃, CH₂= CH-CF₂CF(CF₃)₂, CH₂=CH-C(CF₃)₃, CH₂=CH-(CF₂)₄CF₃, CH₂=CH-CF₂CF₂CF(CF₃)₂, and CH₂=CH-(CF₂)₅CF₃.

As the monomer (b), CH₂=CH-CF₃, CH₂=CH-CF₂CF₃, CH₂=CH-CF(CF₃)₂, CH₂=CH-(CF₂)₃CF₃, and CH₂=CH-(CF₂)₅CF₃ are preferred, CH₂=CH-CF₃, CH₂=CH-CF₂CF₃, CH₂=CH-(CF₂)₃CF₃, and CH₂=CH-(CF₂)₅CF₃ are more preferred, and CH₂=CH-(CF₂)₃CF₃ and CH₂=CH-(CF₂)₅CF₃ are still more preferred.

A single type of the monomer (b) may be used alone, or two or more types thereof may be used in combination.

Examples of the monomer (c) include a compound represented by the following formula (3).

CH₂=CH-O-C(=O)R⁵ Formula (3)

In the Formula (3), R⁵ is an alkyl group, a cycloalkyl group, an aryl group or a heterocyclic group.

R⁵ is preferably an alkyl group. The number of carbon atoms in the alkyl group is preferably from 1 to 30, more preferably from 1 to 22, still more preferably from 1 to 18, and particularly preferably from 1 to 8 from the viewpoints that the monomer (a) and the monomer (b) are easily copolymerized, and the adhesion between the present composition and an article to be treated with the present composition is favorable.

The number of carbon atoms forming the ring of the cycloalkyl group is, for example, from 3 to 8.

With respect to R⁵, the alkyl group, the cycloalkyl group, the aryl group, and the heterocyclic group may each have a reactive group and a halogen atom. Further, the alkyl group, the cycloalkyl group, the aryl group, and the heterocyclic group may each have a linking group such as an etheric oxygen atom, a carbonyloxy group, or a carbonyl group at a portion other than the bonding terminal. Furthermore, the alkyl group, the cycloalkyl group, the aryl group, and the heterocyclic group may each have a polymerizable carbon-carbon double bond. The reactive group will be described in detail later.

R⁵ preferably does not have a polymerizable carbon-carbon double bond.

Examples of the monomer (c) include vinyl acetate, vinyl propionate, vinyl butyrate, vinyl pivalate, vinyl caproate, vinyl caprylate, vinyl laurate, vinyl myristate, vinyl palmitate, vinyl stearate, vinyl oleate, vinyl benzoate, vinyl chloroacetate, and divinyl adipate.

A single type of the monomer (c) may be used alone, or two or more types thereof may be used in combination.

For example, in order to improve the adhesion between the present composition and an article to be treated with the present composition, the monomer (c) is preferably a carboxylic acid vinyl ester having an alkyl group of 1 to 8 carbon atoms (hereinafter, also referred to as a "monomer (c1)").

For example, in order to further improve the water repellency of the present composition and the article to be treated with the present composition, the monomer (c) is preferably a carboxylic acid vinyl ester having an alkyl group of 12 or more carbon atoms (hereinafter, also referred to as a "monomer (c2)").

When two or more types of monomers (c) are used in combination, two or more types of monomers (c1) may be used in combination, two or more types of monomers (c2) may be used in combination, or the monomer (c1) and the monomer (c2) may be used in combination. Combined use of two or more types of monomers (c1) may contribute to the improvement of the receding contact angle at times.

Examples of the monomer (c1) include a compound in which R⁵ in the above formula (3) is an alkyl group having 1 to 8 carbon atoms. The number of carbon atoms in the alkyl group of the monomer (c1) is preferably from 1 to 3 from the viewpoint of excellent adhesion between the present composition and an article to be treated with the present composition. The alkyl group is preferably linear.

Examples of the monomer (c1) include vinyl acetate, vinyl propionate, vinyl butyrate, vinyl pivalate, and vinyl caproate.

The monomer (c1) is preferably vinyl acetate.

A single type of the monomer (c1) may be used alone, or two or more types thereof may be used in combination.

Examples of the monomer (c2) include a compound in which R⁵ in the above formula (3) is an alkyl group having 12 or more carbon atoms. The number of carbon atoms in the alkyl group of the monomer (c2) is preferably 16 or more from the viewpoint of excellent water repellency. Further, the number of carbon atoms in the alkyl group of the monomer (c2) is preferably 30 or less, more preferably 22 or less, and still more preferably 18 or less, from the viewpoint of excellent availability and handleability. The alkyl group is preferably linear.

Examples of the monomer (c2) include vinyl myristate, vinyl palmitate, vinyl stearate, and vinyl oleate.

As the monomer (c2), vinyl myristate, vinyl palmitate, and vinyl stearate are preferred, and vinyl stearate is more preferred.

A single type of the monomer (c2) may be used alone, or two or more types thereof may be used in combination.

Examples of the monomer (d) include a crosslinkable monomer having a reactive group (excluding the monomer (c)). When the polymer (A) comprises a unit based on a crosslinkable monomer, the washing durability of the water repellency of the article treated with the present composition and the adhesion between the present composition and the article to be treated with the present composition are improved.

Any reactive group may be used as long as it forms a crosslinked structure by reacting with another functional group. Here, another functional group is, for example, a reactive group of a monomer other than the monomer (d), a functional group of a crosslinking agent optionally comprised in the present composition, or a functional group present on the surface of the article to be treated with the present composition.

Examples of the reactive group include a hydroxy group, an epoxy group, an amino group, a monoalkylamino group, a dialkylamino group, a carboxy group, an isocyanate group, an oxazoline group, and a carbodiimide group. The number of carbon atoms in the alkyl group in a monoalkylamino group or a dialkylamino group is, for example, from 1 to 4.

The reactive group is preferably a hydroxy group, an epoxy group, or an amino group, and more preferably a hydroxy group, from the viewpoint of excellent availability and handleability.

The crosslinkable monomer may be a monofunctional monomer having one polymerizable carbon-carbon double bond or a polyfunctional monomer having two or more polymerizable carbon-carbon double bonds. A monofunctional monomer is preferred as the crosslinkable monomer from the viewpoint of excellent polymerizability.

Examples of the crosslinkable monomer include an allyl ester, a vinyl ether, an allyl ether, a (meth)acrylate, and a (meth)acrylamide compound.

Examples of the allyl ester include diallyl adipate.

Examples of the vinyl ether include a compound represented by the following formula (4-1). Examples of the allyl ether include a compound represented by the following formula (4-2). Examples of the (meth)acrylate include a compound represented by the following formula (4-3).

CH₂=CH-O-Z Formula (4-1)

CH₂=CHCH₂-O-Z Formula (4-2)

CH₂=C(R)C(=O)O-Z Formula (4-3)

In Formulas above, Z is an organic group having a reactive group. R is a hydrogen atom or a methyl group.

Examples of Z include an aliphatic hydrocarbon group having a reactive group, an aryl group having a reactive group and a cyclic group having a hetero atom substituted with a reactive group.

Examples of the aliphatic hydrocarbon group include an alkyl group, a group having an oxygen atom between carbon atoms of an alkyl group, an alkenyl group, a group having an oxygen atom between carbon atoms of an alkenyl group, and a cycloalkyl group. The number of carbon atoms in the alkyl group and alkenyl group is, for example, from 1 to 6. The number of carbon atoms forming the ring of the cycloalkyl group is, for example, from 3 to 8.

Examples of the hetero atom include a nitrogen atom, an oxygen atom, and a sulfur atom. The cyclic group having a hetero atom is preferably saturated, more preferably a 3- to 9-membered ring, and still more preferably a 3- to 6-membered ring.

Z is preferably a hydroxyalkyl group. The number of carbon atoms in the hydroxyalkyl group is preferably from 2 to 6.

As the crosslinkable monomer, a vinyl ether and an allyl ether are preferred, and an allyl ether is more preferred because they are excellent in copolymerizability with the monomer (a), the monomer (b) and the monomer (c), and are unlikely to be decomposed by alkaline conditions and the like.

Examples of the crosslinkable monomer include vinyl ethers such as vinyl ethers having a hydroxy group, and glycidyl vinyl ether; allyl ethers having a hydroxy group, and allyl ethers having no hydroxy group such as glycidyl allyl ether; (meth)acrylates such as hydroxyalkyl (meth)acrylates, glycidyl (meth)acrylate, and 2-[(3,5-dimethylpyrazolyl)carbonylamino]ethyl (meth)acrylate; and (meth)acrylamide compounds such as N-methylol acrylamide.

Examples of the vinyl ether having a hydroxy group include 2-hydroxyethyl vinyl ether, 3-hydroxypropyl vinyl ether, 4-hydroxybutyl vinyl ether, diethylene glycol monovinyl ether, and cyclohexanedimethanol monovinyl ether.

Examples of the allyl ether having a hydroxy group include ethylene glycol monoallyl ether, diethylene glycol allyl ether, glycerin monoallyl ether, pentaerythritol triallyl ether, and trimethylolpropane diallyl ether.

Examples of the hydroxyalkyl (meth)acrylate include 2-hydroxyethyl (meth)acrylate, 3-hydroxypropyl (meth)acrylate, 4-hydroxybutyl (meth)acrylate, and polyethylene glycol (meth)acrylate.

Of these, vinyl ethers having a hydroxy group and allyl ethers having a hydroxy group are preferred, and 4-hydroxybutyl vinyl ether, diethylene glycol monovinyl ether, cyclohexanedimethanol monovinyl ether, and ethylene glycol monoallyl ether are more preferred.

A single type of the crosslinkable monomer may be used alone, or two or more types thereof may be used in combination.

Other examples of the monomer (d) include halogenated olefins (excluding the monomer (a) and the monomer (b)), derivatives of halogenated olefins, allyl esters (excluding crosslinkable monomers), vinyl ethers (excluding crosslinkable monomers), allyl ethers (excluding crosslinkable monomers), olefins, (meth)acrylates (excluding crosslinkable monomers), N-vinylpyrrolidone, N-vinyl-ε-caprolactam, and ethyl vinyl sulfide.

Examples of the halogenated olefins (excluding the monomer (a) and the monomer (b)) include vinyl halides and vinylidene halides. More specific examples include vinyl chloride and vinylidene chloride.

Examples of the derivatives of halogenated olefins include perfluoro(alkyl vinyl ethers). Examples of the perfluoro(alkyl vinyl ether) include CF₂=CFOCF₃, CF₂=CFOCF₂CF₃, CF₂=CFOCF₂CF₂CF₃, CF₂=CFOCF₂CF₂CF₂CF₃, and CF₂=CFOCF₂CF(CF₃)OCF₂CF₂CF₃.

Examples of the allyl esters (excluding crosslinkable monomers) include allyl acetate.

Examples of the vinyl ethers (excluding crosslinkable monomers) include methyl vinyl ether, ethyl vinyl ether, n-butyl vinyl ether, iso-butyl vinyl ether, tert-butyl vinyl ether, stearyl vinyl ether, 1-chloromethyl vinyl ether, 2-chloroethyl vinyl ether, chloropropyl vinyl ether, and cyclohexyl vinyl ether.

Examples of the allyl ethers (excluding crosslinkable monomers) include allyl ethyl ether, diallyl ether, and 1,3-diallyloxy-2-propanol.

Examples of the olefins include ethylene and propylene.

Examples of the (meth)acrylates (excluding crosslinkable monomers) include alkyl (meth)acrylates such as methyl (meth)acrylate, ethyl (meth)acrylate, n-butyl (meth)acrylate, tert-butyl (meth)acrylate, lauryl (meth)acrylate, stearyl (meth)acrylate and behenyl (meth)acrylate; and fluoroalkyl (meth)acrylates such as 2-perfluorohexylethyl (meth)acrylate. The polymer (A) preferably does not have a unit based on a (meth)acrylate having a perfluoroalkyl group from the viewpoint that it is possible to obtain an article whose water and oil repellency is even less likely to deteriorate due to alkaline conditions and the like. Therefore, as the (meth)acrylate, a (meth)acrylate having no fluorine atom such as an alkyl (meth)acrylate is preferred.

The total ratio of the unit (a), the unit (b) and the unit (c) with respect to All the units that constitute the polymer (A) is 95 mol% or more, preferably 96 mol% or more, and may be 100 mol%. When the total ratio of the unit (a), the unit (b) and the unit (c) is equal to or more than the above lower limit value, the water repellency of the article treated with the present composition and the washing durability thereof are improved.

When the polymer (A) comprises the unit (d), the total ratio of the unit (a), the unit (b) and the unit (c) with respect to the All the units that constitute the polymer (A) is preferably 99.9 mol% or less, and more preferably 99.5 mol% or less.

The ratio of the unit (a) with respect to All the units that constitute the polymer (A) is preferably 1 mol% or more, and more preferably 3 mol% or more. The ratio of the unit (a) with respect to All the units that constitute the polymer (A) is preferably 12 mol% or less, more preferably 10 mol% or less, and still more preferably 8 mol% or less. When the ratio of the unit (a) is equal to or more than the above lower limit value, the receding contact angle is improved, and the water repellency of the article treated with the present composition is further improved. When the ratio of the unit (a) is equal to or less than the above upper limit value, the polymer (A) can sufficiently comprise the unit (b), and the water repellency of the article treated with the present composition is further improved.

The total ratio of the unit (b) and the unit (c) with respect to All the units that constitute the polymer (A) is preferably 85 mol% or more, and more preferably 90 mol% or more. The total ratio of the unit (b) and the unit (c) with respect to All the units that constitute the polymer (A) is preferably 99 mol% or less, and more preferably 97 mol% or less. If the total ratio of the unit (b) and the unit (c) is equal to or more than the above lower limit value, the water repellency and oil repellency of the article treated with the present composition are further improved. If the total ratio of the unit (b) and the unit (c) is equal to or less than the above upper limit value, the polymer (A) can sufficiently comprise the unit (a), and the water repellency of the article treated with the present composition is further improved.

The molar ratio represented by a formula: (unit (b))/(unit (c)) is preferably 0.20 or more, more preferably 0.30 or more, and still more preferably 0.49 or more. The (unit (b))/(unit (c)) molar ratio is preferably 0.80 or less, and more preferably 0.70 or less. When the (unit (b))/(unit (c)) molar ratio is equal to or more than the above lower limit value, the water repellency of the article treated with the present composition is further improved. When the (unit (b))/(unit (c)) molar ratio is equal to or less than the above upper limit value, polymerization of the monomer components proceeds easily during the production of the polymer (A).

When the monomer (c1) and the monomer (c2) are used in combination, the molar ratio represented by a formula: (unit based on the monomer (c2))/(unit based on the monomer (c1)) is preferably from 0 to 4.0, and more preferably from 2.0 to 3.0.

The ratio of the unit (d) with respect to All the units that constitute the polymer (A) is 5 mol% or less, preferably 4 mol% or less, and may be 0 mol%.

When the polymer (A) further has the unit (d), the ratio of the unit (d) with respect to all the units that constitute the polymer (A) is preferably 0.5 mol% or more, and more preferably 1.0 mol% or more.

All the units that constitute the polymer (A) refer to the sum of the unit (a), the unit (b), the unit (c) and the unit (d).

The ratio of each unit can be calculated from the reaction rate of each monomer by ¹H-NMR or gas chromatography. When the conversion rate of the monomer component to the polymer (A) during the production of the polymer (A) is high (for example, 90% or higher), the ratio of each unit may be calculated based on the charged amount of each monomer. The conversion rate is determined by the method described in Examples below.

The Mn of the polymer (A) is preferably 10,000 or more, more preferably 11,000 or more, and still more preferably 12,000 or more. The Mn of the polymer (A) is preferably 100,000 or less, more preferably 70,000 or less, and still more preferably 50,000 or less. When the Mn of the polymer (A) is equal to or more than the above lower limit value, the water repellency and oil repellency of the article treated with the present composition are further improved. If the Mn of the polymer (A) is equal to or less than the above upper limit value, the water dispersibility of the polymer (A) is further improved.

The Mw of the polymer (A) is preferably 10,000 or more, more preferably 20,000 or more, and still more preferably 30,000 or more. The Mw of the polymer (A) is preferably 150,000 or less, more preferably 120,000 or less, and still more preferably 100,000 or less. When the Mw of the polymer (A) is equal to or more than the above lower limit value, the water repellency and oil repellency of the article treated with the present composition are further improved. When the Mw of the polymer (A) is equal to or less than the above upper limit value, the water dispersibility of the polymer (A) is further improved.

### (Aqueous medium)

Examples of the aqueous medium include water and a mixture of water and a water-soluble organic solvent.

A water-soluble organic solvent is an organic solvent that can be mixed with water at any ratio. As the water-soluble organic solvent, at least one selected from the group consisting of alcohols (excluding ether alcohols), ether alcohols and aprotic polar solvents is preferred. Examples of the alcohol include t-butanol and propylene glycol. Examples of the ether alcohol include 3-methoxymethylbutanol, dipropylene glycol, dipropylene glycol monomethyl ether, and tripropylene glycol. Examples of the aprotic polar solvent include N,N-dimethylformamide, dimethylsulfoxide, tetrahydrofuran (hereinafter also referred to as "THF"), acetonitrile, acetone, 3-methoxy-N,N-dimethylpropanamide, 3-butoxy-N,N-dimethylpropanamide, 3-methoxy-3-methyl-1-butanol, triethylene glycol dimethyl ether, and tetraethylene glycol dimethyl ether.

When the liquid medium is an aqueous medium, the water-soluble organic solvent is preferably an ether alcohol, and more preferably dipropylene glycol, tripropylene glycol or dipropylene glycol monomethyl ether, since the compatibility between the polymer (A) and the aqueous medium is improved and formation of a uniform film on the article is facilitated.

When the aqueous medium is a mixture of water and a water-soluble organic solvent, the content of the water-soluble organic solvent is preferably from 1 to 80 parts by mass, and more preferably from 5 to 60 parts by mass with respect to 100 parts by mass of water.

### (Surfactant)

As the surfactant, a surfactant that does not have a fluorine atom is preferred.

Examples of the surfactant include anionic surfactants, nonionic surfactants, cationic surfactants, and amphoteric surfactants.

As the surfactant, from the viewpoint of excellent dispersion stability of the aqueous dispersion comprising the polymer (A), individual use of a nonionic surfactant, individual use of an anionic surfactant, combined use of a nonionic surfactant and a cationic surfactant, or combined use of a nonionic surfactant and an amphoteric surfactant is preferred, and combined use of a nonionic surfactant and a cationic surfactant is more preferred.

The ratio of a nonionic surfactant and a cationic surfactant (i.e., (nonionic surfactant)/(cationic surfactant)) is preferably from 100/0 to 40/60 (mass ratio), and more preferably from 97/3 to 40/60 (mass ratio).

In a specific combination of a nonionic surfactant and a cationic surfactant, the total amount of the surfactants with respect to 100 parts by mass of the polymer (A) can be set to 5 parts by mass or less. Therefore, the adverse effects of the surfactants on the water repellency and oil repellency of the article treated with the present composition can be reduced.

Examples of the nonionic surfactant include surfactants having no fluorine atoms among surfactants s¹ to s⁶ described in paragraphs [0067] to [0095] of Japanese Unexamined Patent Application, First Publication No. 2009-215370.

As the surfactant s¹, polyoxyethylene alkyl ether is preferred.

As the surfactant s², an acetylene glycol ethylene oxide adduct is preferred.

As the surfactant s³, a polymerization product of ethylene oxide and propylene oxide is preferred.

A single type of nonionic surfactant may be used alone, or two or more types thereof may be used in combination.

Examples of the cationic surfactant include surfactants having no fluorine atoms among surfactants s⁷ described in paragraphs [0096] to [0100] of Japanese Unexamined Patent Application, First Publication No. 2009-215370.

The surfactant s⁷ is preferably an ammonium salt in which one or more hydrogen atoms bonded to a nitrogen atom are substituted with an alkyl group, an alkenyl group, or a polyoxyalkylene chain having a terminal hydroxyl group, and more preferably a compound represented by the following formula (5).

[(R²¹)₄N⁺]·X⁻ Formula (5)

In the Formula (5), R²¹ is a hydrogen atom, an alkyl group having 1 to 22 carbon atoms, an alkenyl group having 2 to 22 carbon atoms, or a polyoxyalkylene chain having a terminal hydroxyl group, four R²¹ groups may be the same or different, but not all four R²¹ groups are hydrogen atoms at the same time, and X⁻ is a counter ion.

X⁻ is preferably a chlorine ion, an ethyl sulfate ion or an acetate ion.

Examples of the compound represented by the formula (5) include monostearyltrimethylammonium chloride, monostearyldimethylmonoethylammonium ethyl sulfate, mono(stearyl)monomethyldi(polyethylene glycol)ammonium chloride, di(tallow alkyl)dimethylammonium chloride, and dimethylmonococonutamine acetate.

A single type of cationic surfactant may be used alone, or two or more types thereof may be used in combination.

Examples of the amphoteric surfactant include a surfactant s8 described among surfactants having no fluorine atoms in paragraphs [0101] to [0102] of Japanese Unexamined Patent Application, First Publication No. 2009-215370.

A single type of amphoteric surfactant may be used alone, or two or more types thereof may be used in combination.

As a combination of surfactants, a combination of the surfactant s¹, the surfactant s², and the surfactant s⁷, a combination of the surfactant s¹, the surfactant s³, and the surfactant s⁷, or a combination of the surfactant s¹, the surfactant s², the surfactant s³, and the surfactant s⁷ is preferred, and the above combination in which the surfactant s⁷ is a compound represented by the formula (5) is more preferred, because there are little adverse effects on the water repellency and oil repellency of the article treated with the present composition, and because the dispersion comprising the polymer (A) has excellent dispersion stability.

### (Other components)

Examples of other components include fluorine-containing polymers other than the polymer (A), non-fluorine-based polymers, non-fluorine-based water and oil repellents, water-soluble polymer resins, crosslinking agents, penetrants, colloidal silica, antifoaming agents, film-forming aids, insecticides, fungicides, preservatives, flame retardants, antistatic agents, anti-wrinkle agents, softeners and pH adjusters.

Examples of the water-soluble polymer resin include hydrophilic polyesters and their derivatives, hydrophilic polyethylene glycols and their derivatives, and hydrophilic polyamines and their derivatives.

Examples of the penetrant include the Dispanol (registered trademark) series manufactured by NOF CORPORATION, i.e., nonionic surfactants having a symmetrical structure with an acetylene group at the center.

Examples of the colloidal silica include the Snowtex (registered trademark) series manufactured by Nissan Chemical Corporation and the Adelite series manufactured by ADEKA Corporation.

Examples of the antifoaming agent include the Olfine (registered trademark) series manufactured by Nissin Chemical Industry Co., Ltd., and the FS Antifoam series manufactured by Dow Coming Toray Co., Ltd.

Examples of the antistatic agent include the Delectol series manufactured by Meisei Chemical Works, Ltd.

Examples of the softener include silicone emulsions and polyethylene wax emulsions.

Examples of the pH adjuster include diethanolamine, triethanolamine, acetic acid, and citric acid.

When the present composition comprises a crosslinking agent, the adhesion to the article to be treated with the present composition tends to be improved.

As the crosslinking agent, an isocyanate-based crosslinking agent, a methylol-based crosslinking agent, a carbodiimide-based crosslinking agent, or an oxazoline-based crosslinking agent is preferred.

Examples of the isocyanate-based crosslinking agent include an aromatic blocked-type isocyanate-based crosslinking agent, an aliphatic blocked-type isocyanate-based crosslinking agent, an aromatic unblocked-type isocyanate-based crosslinking agent, and an aliphatic unblocked-type isocyanate-based crosslinking agent. The isocyanate-based crosslinking agent is preferably a water-dispersible type agent emulsified with a surfactant or a self-water-dispersible type agent having a hydrophilic group.

Examples of the methylol-based crosslinking agent include condensates or precondensates of urea or melamine with formaldehyde, methylol-dihydroxyethylene-urea and derivatives thereof, methylol-ethylene-urea, methylol-propylene-urea, methylol-triazone, dicyandiamide-formaldehyde condensates, methylol-carbamate, methylol-(meth)acrylamide, and polymers thereof.

A carbodiimide-based crosslinking agent is a polymer that has a carbodiimide group within the molecule. A carbodiimide-based crosslinking agent exhibits excellent reactivity with carboxy groups, amino groups, and active hydrogen groups of an article and the like.

An oxazoline-based crosslinking agent is a polymer that has an oxazoline group within the molecule. An oxazoline-based crosslinking agent exhibits excellent reactivity with carboxy groups of an article and the like.

Examples of other crosslinking agents include divinyl sulfone, polyamides and their cationic derivatives, polyamines and their cationic derivatives, epoxy derivatives such as diglycidyl glycerol, halide derivatives such as (epoxy-2,3-propyl)trimethylammonium chloride and N-methyl-N-(epoxy-2,3-propyl) morpholinium chloride, pyridinium salts of chloromethyl ether of ethylene glycol, polyamine-polyamide-epichlorohydrin resins, polyvinyl alcohols and their derivatives, polyacrylamides and their derivatives, and glyoxal resin-based anti-wrinkle agents.

When the present composition comprises a methylol-based crosslinking agent or a glyoxal resin-based anti-wrinkle agent, the present composition preferably comprises a catalyst as an additive. Examples of preferred catalysts include inorganic amine salts and organic amine salts. Examples of the inorganic amine salt include ammonium chloride. Examples of the organic amine salt include amino alcohol hydrochlorides and semicarbazide hydrochlorides. Examples of the amino alcohol hydrochloride include monoethanolamine hydrochloride, diethanolamine hydrochloride, triethanolamine hydrochloride, and 2-amino-2-methylpropanol hydrochloride.

### (Ratio of each component)

When the present composition comprises an aqueous medium, the content of the aqueous medium can be appropriately selected in accordance with the desired solid content concentration of the present composition.

The solid content concentration of the present composition is preferably from 25 to 70% by mass, and more preferably from 30 to 60% by mass, immediately after the production of the present composition.

The solid content concentration of the present composition is preferably from 0.1 to 7% by mass, and more preferably from 0.2 to 5% by mass when the present composition is used for treating an article.

The content of the surfactant in the present composition is preferably from 1 to 6 parts by mass with respect to 100 parts by mass of the polymer (A) immediately after the production of the present composition.

The content of the crosslinking agent in the present composition is preferably from 1 to 50 parts by mass with respect to 100 parts by mass of the polymer (A) when the present composition is used for treating an article.

### (Mechanism of action)

In the present composition described above, the polymer (A) comprises the unit (a), the unit (b), and the unit (c), and the total ratio of these units with respect to all the units that constitute the polymer (A) is 95 mol% or more. Therefore, according to the present composition, an articles treated with the present composition is excellent in water repellency. Further, this water repellency is less likely to deteriorate by washing, and is excellent in washing durability. In addition, since the unit (b) constituting the polymer (A) does not have an ester bond, the water repellency and oil repellency of the article treated with the present composition are less likely to deteriorate under alkaline conditions and the like.

### [Method for producing water and oil repellent composition]

The present composition can be produced, for example, by a method of polymerizing a monomer component comprising a monomer (a), a monomer (b) and a monomer (c) in the presence of a polymerization initiator.

The monomer component may further comprise a monomer (d).

The details and preferred embodiments of the monomer (a), the monomer (b), the monomer (c) and the monomer (d) are as described in the section entitled [Water and oil repellent composition], respectively. Each of the monomer (a), the monomer (b), the monomer (c), and the monomer (d) can be produced by various production methods. If available, commercially available products can be used as monomers.

The total ratio of the monomer (a), the monomer (b) and the monomer (c) with respect to the monomer component is 95 mol% or more, preferably 96 mol% or more, and may be 100 mol%. If the total ratio of the monomer (a), the monomer (b) and the monomer (c) is equal to or more than the above lower limit value, the water repellency of the article treated with the present composition and the washing durability thereof would be excellent.

When the monomer component comprises the monomer (d), the total ratio of the monomer (a), the monomer (b) and the monomer (c) with respect to the monomer component is preferably 99.9 mol% or less, and more preferably 99.5 mol% or less.

The ratio of the monomer (a) with respect to the monomer component is preferably 1 mol% or more, and more preferably 3 mol% or more. The ratio of the monomer (a) with respect to the monomer component is preferably 12 mol% or less, more preferably 10 mol% or less, and still more preferably 8 mol %or less. If the ratio of the monomer (a) is equal to or more than the above lower limit value, the receding contact angle is improved, and the water repellency of the article treated with the present composition is further improved. If the ratio of the monomer (a) is equal to or less than the above upper limit value, the obtained polymer (A) can sufficiently comprise the unit (b), and the water repellency of the article treated with the present composition would be further improved.

The total ratio of the monomer (b) and the monomer (c) with respect to the monomer component is preferably 85 mol% or more, and more preferably 90 mol% or more. The total ratio of the monomer (b) and the monomer (c) with respect to the monomer component is preferably 99 mol% or less, and more preferably 97 mol% or less. When the total ratio of the monomer (b) and the monomer (c) is equal to or more than the above lower limit value, the water repellency and oil repellency of the article treated with the present composition are further improved. If the total ratio of the monomer (b) and the monomer (c) is equal to or less than the above upper limit value, the monomer (a) can be sufficiently comprised, and the water repellency of the article treated with the present composition is further improved.

The molar ratio represented by a formula: (monomer (b))/(monomer (c)) is preferably 0.20 or more, more preferably 0.30 or more, and still more preferably 0.49 or more. The (monomer (b))/(monomer (c)) molar ratio is preferably 0.80 or less, and more preferably 0.70 or less. When the (monomer (b))/(monomer (c)) molar ratio is equal to or more than the above lower limit value, the water repellency of the article treated with the present composition is further improved. When the (monomer (b))/(monomer (c)) molar ratio is equal to or less than the above upper limit value, polymerization of the monomer components proceeds easily during the production of the polymer (A).

In the monomer (c), the molar ratio represented by a formula: (monomer (c2))/(monomer (c1)) is preferably from 0 to 4.0, more preferably from 0.01 to 3.5, and still more preferably from 0.05 to 3.0.

The ratio of the monomer (d) with respect to the monomer component is 5 mol% or less, and preferably 4 mol% or less. In other examples, the monomer component may not comprise the monomer (d).

When the monomer component comprises the monomer (d), the ratio of the monomer (d) with respect to the monomer component is preferably 0.5 mol% or more, and more preferably 1.0 mol% or more.

Examples of polymerization initiators include thermal polymerization initiators, photopolymerization initiators, radiation polymerization initiators, radical polymerization initiators, and ionic polymerization initiators. Among them, radical polymerization initiators are preferred. As the radical polymerization initiator, for example, an azo-based polymerization initiator, a peroxide-based polymerization initiator, and a redox polymerization initiator are used depending on the polymerization temperature. As the radical polymerization initiator, an azo-based compound is preferred, and a salt of an azo-based compound is more preferred. The polymerization temperature is preferably from 20 to 150°C.

The amount of the polymerization initiator added is preferably from 0.1 to 5 parts by mass, and more preferably from 0.1 to 3 parts by mass, with respect to 100 parts by mass of the monomer component.

A molecular weight regulator may be used when polymerizing the monomer component. As the molecular weight regulator, for example, aromatic compounds, mercaptoalcohols, mercaptocarboxylic acids, and alkylmercaptans are preferred, and mercaptocarboxylic acids and alkylmercaptans are more preferred. Examples of the molecular weight regulator include mercaptoethanol, mercaptopropionic acid, n-octylmercaptan, n-dodecylmercaptan, tert-dodecylmercaptan, stearylmercaptan, and α-methylstyrene dimer (CH₂=C(Ph)CH₂C(CH₃)₂Ph ). Ph represents a phenyl group.

The amount of the molecular weight regulator added is preferably 5 parts by mass or less, more preferably 2 parts by mass or less, and may be 0 parts by mass with respect to 100 parts by mass of the monomer component.

Examples of methods for polymerizing the monomer component include an emulsion polymerization method, a solution polymerization method, a suspension polymerization method, and a bulk polymerization method. Among them, an emulsion polymerization method is preferred. By polymerizing the monomer component by an emulsion polymerization method, the conversion rate of the monomer component to the polymer (A) is improved without using a solvent other than an aqueous medium, and the molecular weights (Mn, Mw) of the polymer (A) can be increased.

In the emulsion polymerization method, for example, a monomer component is polymerized in an emulsion comprising an aqueous medium, the monomer component and a polymerization initiator. The emulsion may comprise a surfactant, if required.

Examples of the aqueous medium and the surfactant include the same compounds as those exemplified in the section entitled [Water and oil repellent composition], respectively.

The emulsion can be prepared by mixing an aqueous medium, the monomer components, and, if necessary, a surfactant, dispersing the resulting mixture with a homogenizer, a high-pressure emulsifier, or the like, and then adding a polymerization initiator.

The concentration of the monomer component in the emulsion is preferably from 20 to 60% by mass, and more preferably from 30 to 50% by mass. If the concentration of the monomer component in the emulsion is within the above range, the conversion rate of the monomer component to the polymer (A) can be improved during polymerization of the monomer component, and the molecular weights of the polymer (A) can be sufficiently increased.

The content of the surfactant in the emulsion is preferably from 1 to 6 parts by mass with respect to 100 parts by mass of the monomer component. When the content of the surfactant is equal to or more than the above lower limit value, the dispersion stability of the emulsion is excellent. If the content of the surfactant is equal to or less than the above upper limit value, the adverse effects due to the surfactant on the water repellency and oil repellency of the article treated with the composition comprising the polymer (A) can be reduced.

The conversion rate of the monomer component to the polymer (A) at the end of polymerization is preferably 80% or more, and more preferably 90% or more. By increasing the conversion rate, the molecular weight of the polymer (A) is also increased, and the water repellency and oil repellency are also improved. In addition, by increasing the conversion rate, deterioration in performance due to residual monomers can be suppressed, and the amount of fluorine atoms comprised in the polymer (A) is increased, resulting in favorable water repellency and oil repellency. In order to obtain a conversion rate of 80% or more, it is preferable to optimize the emulsion composition and the polymerization time.

A dispersion of the polymer (A) can be obtained by polymerizing the monomer component in the emulsion.

In the dispersion, the polymer (A) is dispersed in the form of emulsified particles in an aqueous medium.

In the dispersion, the average particle size of emulsified particles of the polymer (A) is preferably from 20 to 200 nm, more preferably from 40 to 190 nm, and still more preferably from 60 to 180 nm. When the average particle size is equal to or less than the above upper limit value, the water repellency of the article treated with the emulsified particles of the polymer (A) and the dispersibility of the emulsified particles of the polymer (A) are further improved. When the average particle size is equal to or more than the above lower limit value, the emulsified particles of the polymer (A) are more stable against mechanical shear.

The average particle size of the emulsified particles of the polymer (A) is calculated by the cumulant analysis method from the autocorrelation function obtained by the dynamic light scattering method for a sample obtained by diluting the dispersion of the polymer (A) with water to a solid content concentration of 1% by mass.

The dispersion of the polymer (A) obtained by polymerizing the monomer component in the emulsion may be used as it is as the present composition, or it may be diluted with an aqueous medium to adjust the solid content concentration and then used as the present composition. Other components may be further added to the present composition.

### (Mechanism of action)

In the method for producing the present composition described above, the monomer (a), the monomer (b), and the monomer (c) are comprised in the monomer component, and the total ratio thereof with respect to the monomer component is 95 mol% or more. Therefore, it is possible to produce a water and oil repellent composition from which an article with excellent water repellency and excellent washing durability of the water repellency can be produced.

In addition, since the monomer (b) does not have an ester bond, the water repellency and oil repellency of the article treated with the present composition are less likely to deteriorate under alkaline conditions and the like.

### [Article]

The article of the present invention is an article treated with the present composition.

Examples of the article to be treated with the present composition include fibers, fabrics, products provided with fibers or fabrics, glass, paper, wood, leather, artificial leather, stone, concrete, ceramics, metals, metal oxides, resin molded products, and porous products.

Examples of the fabric include woven fabrics, knitted fabrics, non-woven fabrics, and raised fabrics. Examples of the product provided with fibers or fabrics include clothing such as robes, ski wear, rainwear, coats, blousons, windbreakers, down jackets, sportswear, work clothing, uniforms, protective clothing, backpacks, bags, and tents.

Examples of the porous product include filters. Examples of materials for the porous product include polypropylene, polyethylene terephthalate, polytetrafluoroethylene, glass fibers, cellulose nanofibers, carbon fibers, and cellulose acetate.

The article to be treated is preferably fibers, fabrics, or products provided with fibers or fabrics.

Although the type of the fiber is not particularly limited, examples thereof include natural fibers such as cotton, wool, silk, and cellulose; synthetic fibers such as polyester, polyamide, acrylic, and aramid; regenerated fibers such as rayon, viscose rayon, and lyocell; mixed fibers of natural fibers and synthetic fibers; and mixed fibers of natural fibers and regenerated fibers.

In the case of a non-woven fabric, examples of the types of fibers include polyethylene, polypropylene, polyolefin, polyethylene terephthalate, polytetrafluoroethylene, rayon, and glass.

Although the thickness of the fabric is not particularly limited, it is usually from 0.01 to 5 mm.

The treatment method is not particularly limited as long as the water and oil repellent composition can adhere to the article to be treated. For example, when the present composition comprises a liquid medium, a method in which the article is treated with the present dispersion by various methods such as coating, impregnation, immersion, spraying, brushing, padding, size press coating, and roll coating, followed by drying can be mentioned.

The amount of the solid content in the water and oil repellent composition to be adhered to the article to be treated is not particularly limited. For example, in the case of a fabric, it is preferably from 0.001 to 0.05 g per 1 g of fabric.

The drying may be carried out at normal temperature or by heating, preferably by heating. When drying by heating, the heating temperature is preferably from 40 to 200°C. Further, when the water and oil repellent composition comprises a crosslinking agent, it is preferable to cure the composition by heating to a temperature equal to or higher than the crosslinking temperature of the crosslinking agent, if necessary.

### (Mechanism of action)

Since the article of the present invention described above is treated with the present composition, it is excellent in water repellency and washing durability of the water repellency. Further, since the unit (b) constituting the polymer (A) does not have an ester bond, the water repellency and oil repellency of the article of the present invention are less likely to deteriorate under alkaline conditions and the like.

### [Examples]

The present invention will be described in detail below with reference to Examples, but the present invention is not limited thereto. The term "part(s)" means "part(s) by mass".

Examples 1 to 5 and 15 are Examples of the present invention, and Examples 6 to 14 and 16 are Comparative Examples.

### [Ratio of monomer units]

The composition of a polymer (ratio of each monomer unit with respect to all the units constituting the polymer) was calculated based on the charged amount of each monomer.

By calculating the ratio of each monomer in the polymer by ¹H-NMR after removing the surfactant and solvent from the polymer dispersion obtained in each Example, it was confirmed that the composition was almost the same as the charged composition. Alternatively, by gas chromatography of the polymer dispersion obtained in each Example, each unreacted monomer was quantified and the reaction rate of each monomer was calculated, and it was confirmed that the composition was almost the same as the charged composition by calculating the ratio of each monomer unit with respect to all the units constituting the polymer.

### [Conversion rate]

From the theoretical value of the solid content concentration of the polymer dispersion calculated from the charged amount of the raw materials and the measured value of the solid content concentration of the polymer dispersion, the conversion rate from the monomer component to the polymer was obtained by the formula: (measured value)/(theoretical value) × 100. A conversion rate of 90% or higher was rated as A (good), a conversion rate of 80% or higher and lower than 90% was rated as B (fair), and a conversion rate of lower than 80% was rated as C (failed).

### [Molecular weight]

### (Recovery of polymer)

6 g of a polymer dispersion obtained in each Example was added dropwise to 60 g of a mixed liquid of 6 g of hexane and 54 g of 2-butanol, and the resulting mixture was stirred to precipitate a solid. The obtained solid was separated after centrifugation at 3,000 rpm for 5 minutes. 30 g of alcohol denatured with isopropyl alcohol (product name: 95% alcohol denatured with IPA, manufactured by Imazu Chemical Co. Ltd.) and 30 g of ion-exchanged water were added to the separated solid, and the resulting mixture was thoroughly stirred. After centrifugation at 3,000 rpm for 5 minutes, the obtained solid was separated from the supernatant and vacuum dried overnight at 35°C to obtain a polymer.

### (Measurement of Mn and Mw)

The recovered polymer was dissolved in a mixed solvent of fluorine-containing solvent (AK-225, manufactured by AGC Inc.)/tetrahydrofuran (hereinafter referred to as "THF") = 6/4 (volume ratio), to prepare a solution having a solid content concentration of 0.5% by mass, and the solution was passed through a 0.2 µm filter to prepare an analytical sample. The Mn and Mw were measured by GPC measurement for the analytical sample. The measurement conditions are as follows.
Apparatus: HLC-8320GPC manufactured by Tosoh Corporation,
Column: MIXED-C manufactured by Polymer Laboratories, Ltd., 300 × 7.5 mm, 5 µm,
Mobile phase: AK-225/THF = 6/4 (volume ratio),
Flow rate: 1.0 mL/min,
Oven temperature: 37°C,
Sample concentration: 1.0% by mass,
Injection volume: 50 µL,
Detector: RI, and
Molecular weight standard: polymethyl methacrylate (Mp = 2,136,000, 955,000, 569,000, 332,800, 121,600, 67,400, 31,110, 13,300, 7,360, 1,950, 1,010, and 550).

### [Receding contact angle of article]

The receding contact angle of water on the surface of the produced article was measured by the Wilhelmy method using a Dataphysics surface tensiometer (DCAT11). 200 mL of pure water at a water temperature of 20°C ± 0.2°C was placed in a glass container, the article for receding contact angle evaluation produced by the method described later was immersed in and then pulled up from water at a constant speed so that the longitudinal direction thereof was perpendicular with respect to the water surface, and the receding contact angle was measured by analyzing the force applied when the article was immersed in and when the article was pulled up using a computer.

### [Initial water repellency of test cloth: Initial]

The water repellency of a produced test cloth was evaluated in accordance with the spray test specified in JIS L 1092: 1998 on a scale of 1 to 5. The higher the rating, the better the water repellency. A rating attached with a symbol of + (or -) indicates slightly better (or worse) water repellency than that rating.

### [Water repellency of test cloth after washing: HL20]

The test cloth for which the initial water repellency was evaluated was washed 20 times repeatedly in accordance with the washing method of AATCC Monograph 6-2016. After washing, it was tumble dried in accordance with the method of AATCC Monograph 6-2016, and then the water repellency was evaluated.

### [(Monomer (a)]

CTFE: chlorotrifluoroethylene.

### [(Monomer (b)]

C4OLF: CH₂=CH-(CF₂)₃CF₃ (manufactured by Tokyo Chemical Industry Co., Ltd.).

### [(Monomer (c)]

AcV: vinyl acetate (manufactured by Tokyo Chemical Industry Co., Ltd.).
StV: vinyl stearate (manufactured by Tokyo Chemical Industry Co., Ltd.).
PiV: vinyl pivalate (manufactured by Tokyo Chemical Industry Co., Ltd.).

### [(Monomer (d)]

EGMAE: ethylene glycol monoallyl ether (manufactured by Tokyo Chemical Industry Co., Ltd.).

### [Surfactant]

E420: polyoxyethylene oleyl ether (adduct with about 12.8 moles of ethylene oxide, manufactured by Kao Corporation under the product name of Emulgen 420).

E430: 10% by mass aqueous solution of polyoxyethylene oleyl ether (adduct with about 30 moles of ethylene oxide, manufactured by Kao Corporation under the product name of Emulgen 430).

P204: ethylene oxide/propylene oxide polymer (average molecular weight: 3,330, containing 40% by mass of ethylene oxide, manufactured by NOF Corporation under the product name of Plonon No. 204). However, in Example 14, P204 was diluted with water to adjust the final solid content concentration to 10% by mass for use.

LQ1863: 63% by mass solution of (C16-C18) alkyltrimethylammonium chloride in water and isopropyl alcohol (manufactured by of Lion Specialty Chemicals Co., Ltd., under the product name of LIPOQUAD 18-63).

SFY485: Surfynol 485 (acetylene glycol ethylene oxide adduct (with 30 moles of ethylene oxide, manufactured by Nissin Chemical Industry Co., Ltd., under the product name of Surfynol 485).

### [Media]

Water: ion-exchanged water.
DPG: dipropylene glycol.

### [Polymerization initiator]

VA-061A: 20% by mass aqueous solution of acetic acid salt of 2,2'-azobis[2-(2-imidazolin-2-yl)propane] (VA-061, manufactured by FUJIFILM Wako Pure Chemical Corporation) (VA-061: acetic acid = 1:0.8 (mass ratio)). However, in Example 14, the solid content concentration of the acetic acid salt of VA-061 was adjusted to 10% by mass for use.

### [Examples 1 to 5]

### (Production of polymer dispersion)

The monomers (other than AcV and CTFE), surfactants and media shown in Table 1 were placed in a glass container, heated at 55°C for 30 minutes, and then mixed with a homomixer (BIO MIXER manufactured by Nihonseiki Kaisha, Ltd.) to obtain a liquid mixture. The obtained liquid mixture was pre-emulsified at 10 MPa, while being kept at 55°C, using a high-pressure emulsifier (MiniLab, manufactured by APV Rannie), and then treated at 40 MPa to obtain an emulsion. The obtained emulsion was placed in a stainless steel reactor and cooled to 30°C or lower. The polymerization initiator shown in Table 1 was added thereto, and after replacing the gas phase with nitrogen, AcV and CTFE were introduced in the amounts shown in Table 1, and polymerization was carried out at 55°C for 24 hours with stirring to obtain a dispersion comprising a polymer.

Table 1 shows the conversion rate of the monomers to a polymer, the solid content concentration of the dispersion, and the Mn and Mw of the polymer in the dispersion. The charged amounts (g) of surfactants and polymerization initiator are the total amount including the mass of the media. The same applies hereinafter.

Table 3 shows the monomer compositions, and values of a + b + c, b + c, and b/c. a + b + c represents the total ratio (mol%) of the monomer (a), the monomer (b) and the monomer (c) with respect to the monomer component. b + c represents the total ratio (mol%) of the monomer (b) and the monomer (c) with respect to the monomer component. b/c represents the molar ratio of (monomer (b))/(monomer (c)). The same applies hereinafter.

### (Production of article for receding contact angle evaluation)

The surfactants and solvents were removed from the polymer dispersion of each example, and the obtained polymer was diluted with a mixed medium of AC6000 (manufactured by AGC Inc.)/THF (manufactured by Junsei Chemical Co., Ltd.) = 1/1 (volume ratio), and the final solid content concentration was adjusted to 2.0% by mass to obtain a water and oil repellent composition.

The obtained water and oil repellent composition was applied on the surface of a glass substrate (SUPER GRADE MICROSCOPE SLIDES, manufactured by THICK Inc., under the product name of ASLAB, length: 25 mm, width: 75 mm, thickness: 1.0 to 1.2 mm) using a dip coater (apparatus name: F255) by moving back and forth 3 times at a speed of 1.0 mm/sec, and dried at 150°C for 10 minutes to obtain an article for receding contact angle evaluation.

The receding contact angle of the produced article was evaluated by the evaluation method described above. The results are shown in Table 3.

### [Examples 6 to 14]

### (Production of polymer dispersion)

The monomers (other than AcV), surfactants and media shown in Table 2 were placed in a glass container, heated at 55°C for 30 minutes, and then mixed with a homomixer (BIO MIXER manufactured by Nihonseiki Kaisha, Ltd.) to obtain a liquid mixture. The obtained liquid mixture was pre-emulsified at 10 MPa, while being kept at 55°C, using a high-pressure emulsifier (MiniLab, manufactured by APV Rannie), and then treated at 40 MPa to obtain an emulsion. The obtained emulsion was placed in a stainless steel reactor and cooled to 30°C or lower. The polymerization initiator shown in Table 2 was added thereto, and after replacing the gas phase with nitrogen, AcV was introduced in the amount shown in Table 2, and polymerization was carried out at 55°C for 24 hours with stirring to obtain a dispersion comprising a polymer. Table 2 shows the conversion rate of the monomers to a polymer, the solid content concentration of the dispersion, and the Mn and Mw of the polymer in the dispersion. Table 4 shows the monomer compositions, and values of a + b + c, b + c, and b/c.

### (Production of article for receding contact angle evaluation)

Using the obtained polymer dispersion, a water and oil repellent composition was prepared in the same manner as in Examples 1 to 5, an article for receding contact angle evaluation was produced, and the receding contact angle was evaluated. The results are shown in Table 4.

**[Table 1]**

| | | | Molecular weight | Active ingredient concentration | Example 1 | Example 2 | Example 3 | Example 4 | Example 5 |
|---|---|---|---|---|---|---|---|---|---|
| | | | | (% by mass) | | | | | |
| Charged amount (g) | Monomer | CTFE | 478.1 | - | 6.0 | 6.0 | 6.0 | 6.0 | 6.0 |
| | | C4OLF | 346.09 | - | 69.8 | 69.8 | 69.8 | 66.8 | 69.8 |
| | | AcV | 86.09 | - | 43.3 | 33.7 | 33.7 | 30.7 | 44.5 |
| | | StV | 310.52 | - | - | - | 9.6 | - | - |
| | | PiV | 128.17 | - | - | 9.6 | - | 15.6 | - |
| | | EGMAE | 102.13 | - | 1.2 | 1.2 | 1.2 | 1.2 | - |
| | Medium | Water | - | - | 177.7 | 177.7 | 177.7 | 177.7 | 177.7 |
| | | DPG | - | - | 30.1 | 30.1 | 30.1 | 30.1 | 30.1 |
| | Surfactant | E420 | - | 100 | 2.4 | 2.4 | 2.4 | 2.4 | 2.4 |
| | | P204 | - | 100 | 1.2 | 1.2 | 1.2 | 1.2 | 1.2 |
| | | SFY485 | - | 100 | 2.4 | 2.4 | 2.4 | 2.4 | 2.4 |
| | | LQ1863 | - | 63 | 1.0 | 1.0 | 1.0 | 1.0 | 1.0 |
| | Initiator | VA-061A | - | 20 | 18.0 | 18.0 | 18.0 | 18.0 | 18.0 |
| Conversion rate | | | | | A | A | A | A | A |
| Solid content concentration (% by mass) | | | | | 33.8 | 34.3 | 33.4 | 33.9 | 34.1 |
| Molecular weight | | | Mn | | 15,000 | 16,000 | 17,000 | 19,000 | 16,000 |
| | | | Mw | | 25,000 | 31,000 | 24,000 | 48,000 | 28,000 |

**[Table 2]**

| | | | Molecular weight | Active ingredient concentration | Example 6 | Example 7 | Example 8 | Example 9 | Example 10 | Example 11 | Example 12 | Example 13 | Example 14 |
|---|---|---|---|---|---|---|---|---|---|---|---|---|---|
| | | | | (% by mass) | | | | | | | | | |
| Charge d amount (g) | Monomer | CTFE | 478.1 | - | - | - | - | - | - | - | - | - | - |
| | | C4OLF | 346.09 | - | 75.8 | 75.8 | 75.8 | 69.8 | 69.8 | 69.8 | 66.8 | 66.8 | 120.0 |
| | | AcV | 86.09 | - | 43.3 | 33.7 | 33.7 | 49.3 | 39.7 | 39.7 | 36.7 | 36.7 | 75.0 |
| | | StV | 310.52 | - | - | 9.6 | - | - | - | 9.6 | - | 15.6 | - |
| | | PiV | 128.17 | - | - | - | 9.6 | - | 9.6 | - | 15.6 | - | - |
| | | EGMAE | 102.13 | - | 1.2 | 1.2 | 1.2 | 1.2 | 1.2 | 1.2 | 1.2 | 1.2 | - |
| | Medium | Water | - | - | 177.7 | 177.7 | 177.7 | 177.7 | 177.7 | 177.7 | 177.7 | 177.7 | 119.0 |
| | | DPG | - | - | 30.1 | 30.1 | 30.1 | 30.1 | 30.1 | 30.1 | 30.1 | 30.1 | 34.0 |
| | Surfactant | E420 | - | 100 | 2.4 | 2.4 | 2.4 | 2.4 | 2.4 | 2.4 | 2.4 | 2.4 | - |
| | | P204 | - | 100 | 1.2 | 1.2 | 1.2 | 1.2 | 1.2 | 1.2 | 1.2 | 1.2 | - |
| | | P204 | | 10 | - | - | - | - | - | - | - | - | 100 |
| | | SFY485 | - | 100 | 2.4 | 2.4 | 2.4 | 2.4 | 2.4 | 2.4 | 2.4 | 2.4 | - |
| | | E430 | - | 10 | - | - | - | - | - | - | - | - | 19.0 |
| | | LQ1863 | - | 63 | 1.0 | 1.0 | 1.0 | 1.0 | 1.0 | 1.0 | 1.0 | 1.0 | 5.0 |
| | Initiator | VA-061A | - | 20 | 18.0 | 18.0 | 18.0 | 18.0 | 18.0 | 18.0 | 18.0 | 18.0 | - |
| | | VA-061A | - | 10 | - | - | - | - | - | - | - | - | 19.6 |
| Conversion rate | | | | | A | A | A | A | A | A | A | A | A |
| Solid content concentration (% by mass) | | | | | 33.3 | 32.3 | 31.8 | 32.3 | 32.8 | 33.6 | 32.3 | 32.4 | 50.2 |
| Molecular weight | | | Mn | | 21,000 | 17,000 | 22,000 | 19,000 | 24,000 | 20,000 | 18,000 | 25,000 | 21,000 |
| | | | Mw | | 27,000 | 24,000 | 31,000 | 24,000 | 27,000 | 22,000 | 21,000 | 28,000 | 24,000 |

**[Table 3]**

| | | Monomer | | Molecular weight | Example 1 | Example 2 | Example 3 | Example 4 | Example 5 |
|---|---|---|---|---|---|---|---|---|---|
| Monomer composition | Number of parts | a | CTFE | 116.47 | 5.0 | 5.0 | 5.0 | 5.0 | 5.0 |
| | | b | C4OLF | 246.01 | 58.0 | 58.0 | 58.0 | 55.5 | 58.0 |
| | | c | AcV | 86.09 | 36.0 | 28.0 | 28.0 | 25.5 | 37.0 |
| | | c | StV | 310.52 | - | - | 8.0 | - | - |
| | | c | PiV | 128.17 | - | 8.0 | - | 13.0 | |
| | | d | EGMAE | 102.13 | 1.0 | 1.0 | 1.0 | - | - |
| | | Total | | | 100.0 | 100.0 | 100.0 | 100.0 | 100.0 |
| Monomer composition | mol% | a | CTFE | 116.47 | 6.1 | 6.3 | 6.7 | 6.4 | 6.1 |
| | | b | C4OLF | 246.01 | 33.4 | 34.9 | 36.9 | 33.4 | 33.3 |
| | | c | AcV | 86.09 | 59.1 | 48.1 | 50.9 | 43.8 | 60.7 |
| | | c | StV | 310.52 | - | - | 4.0 | - | - |
| | | c | PiV | 128.17 | - | 9.2 | | 15.0 | - |
| | | d | EGMAE | 102.13 | 1.4 | 1.5 | 1.5 | 1.4 | - |
| | | Total | | | 100.0 | 100.0 | 100.0 | 100.0 | 100.0 |
| a + b + c (mol%) | | | | | 98.6 | 98.5 | 98.5 | 98.6 | 100.0 |
| b + c (mol%) | | | | | 92.5 | 92.2 | 91.8 | 92.2 | 93.9 |
| b/c (molar ratio) | | | | | 0.57 | 0.61 | 0.67 | 0.57 | 0.55 |
| Evaluation | Receding contact angle (water) | | | deg. | 60.7 | 60.0 | 58.0 | 68.1 | 60.4 |

**[Table 4]**

| | | Monomer | | Molecular weight | Example 6 | Example 7 | Example 8 | Example 9 | Example 10 | Example 11 | Example 12 | Example 13 | Example 14 |
|---|---|---|---|---|---|---|---|---|---|---|---|---|---|
| Monomer composition | Number of parts | a | CTFE | 116.47 | - | - | - | - | - | - | - | - | - |
| | | b | C4OLF | 246.01 | 63.0 | 63.0 | 63.0 | 58.0 | 58.0 | 58.0 | 55.5 | 55.5 | 62.0 |
| | | c | AcV | 86.09 | 36.0 | 28.0 | 28.0 | 41.0 | 33.0 | 33.0 | 30.5 | 30.5 | 38.0 |
| | | c | StV | 310.52 | - | 8.0 | - | - | - | 8.0 | - | 13.0 | - |
| | | c | PiV | 128.17 | - | - | 8.0 | - | 8.0 | - | 13.0 | - | - |
| | | d | EGMAE | 102.13 | 1.0 | 1.0 | 1.0 | 1.0 | 1.0 | 1.0 | 1.0 | 1.0 | - |
| | | Total | | | 100.0 | 100.0 | 100.0 | 100.0 | 100.0 | 100.0 | 100.0 | 100.0 | 100.0 |
| Monomer composition | mol% | a | CTFE | 116.47 | - | - | - | - | - | - | - | - | - |
| | | b | C4OLF | 246.01 | 37.4 | 41.5 | 39.2 | 32.7 | 34.1 | 36.0 | 32.6 | 35.7 | 36.3 |
| | | c | AcV | 86.09 | 61.2 | 52.7 | 49.8 | 65.9 | 55.5 | 58.6 | 51.3 | 56.1 | 63.7 |
| | | c | StV | 310.52 | - | 4.2 | - | - | - | 3.9 | - | 6.6 | - |
| | | c | PiV | 128.17 | - | - | 9.5 | - | 9.0 | - | 14.7 | | - |
| | | d | EGMAE | 102.13 | 1.4 | 1.6 | 1.5 | 1.4 | 1.4 | 1.5 | 1.4 | 1.6 | - |
| | | Total | | | 100.0 | 100.0 | 100.0 | 100.0 | 100.0 | 100.0 | 100.0 | 100.0 | 100.0 |
| a + b + c (mol%) | | | | | 98.6 | 98.4 | 98.5 | 98.6 | 98.6 | 98.5 | 98.6 | 98.4 | 100.0 |
| b + c (mol%) | | | | | 98.6 | 98.4 | 98.5 | 98.6 | 98.6 | 98.5 | 98.6 | 98.4 | 100.0 |
| b/c (molar ratio) | | | | | 0.61 | 0.73 | 0.66 | 0.50 | 0.53 | 0.58 | 0.49 | 0.57 | 0.57 |
| Evaluation | Receding contact angle (water) | | | deg. | 53.9 | 49.8 | 55.0 | 55.4 | 55.1 | 43.0 | 57.9 | 50.5 | 53.0 |

The articles using the water and oil repellent compositions of Examples 1 to 5 had larger receding contact angles of water than those of Examples 6 to 14 and were excellent in water repellency.

### [Example 15]

### (Production of polymer dispersion)

A dispersion comprising a polymer was obtained in the same manner as in Examples 1 to 5, with the exception that the types and amounts of monomers charged were as shown in Table 5. Table 5 shows the conversion rate of the monomers to a polymer, the solid content concentration of the dispersion, and the Mn and Mw of the polymer in the dispersion. Table 6 shows the monomer compositions, and values of a + b + c, b + c, and b/c.

### (Production of test cloth)

After diluting the polymer dispersion of each example with tap water and adjusting the final solid content concentration to 2.0% by mass, an isocyanate-based crosslinking agent (Meikanate TP-10, manufactured by Meisei Chemical Works, Ltd.) was added thereto so that the final concentration was 1.0% by mass to obtain a water and oil repellent composition.

Nylon (Ny) Taslan or Ny high-density taffeta was immersed in the obtained water and oil repellent composition, and wrung so that the wet pickup was from 60 to 65% by mass. This was heated at 110°C for 90 seconds, then dried at 170°C for 60 seconds, and allowed to stand overnight in a room at 23°C under a humidity of 50% to produce a test cloth.

Using the produced test cloth, the initial water repellency (hereinafter also referred to as "Initial") and the water repellency after washing (HL20) were evaluated by the evaluation method described above. The evaluation results are shown in Table 6.

### [Example 16]

### (Production of polymer dispersion)

A dispersion comprising a polymer was obtained in the same manner as in Examples 6 to 14, with the exception that the types and amounts of monomers charged were as shown in Table 5. Table 5 shows the conversion rate of the monomers to a polymer, the solid content concentration of the dispersion, and the Mn and Mw of the polymer in the dispersion. Table 6 shows the monomer compositions, and values of a + b + c, b + c, and b/c.

### (Fiber treatment, production of test cloth)

Using the obtained polymer dispersion, a water and oil repellent composition was prepared in the same manner as in Example 15, a test cloth was produced, and the initial water repellency (Initial) and the water repellency after washing (HL20) were evaluated. The evaluation results are shown in Table 6.

**[Table 5]**

| | | | Molecular weight | Active ingredient concentration (% by mass) | Example 15 | Example 16 |
|---|---|---|---|---|---|---|
| Charged amount (g) | Monomer | CTFE | 478.1 | - | 6.0 | - |
| | | C4OLF | 346.09 | - | 36.1 | 36.1 |
| | | AcV | 86.09 | - | 6.0 | 12.0 |
| | | StV | 310.52 | - | 71.0 | 71.0 |
| | | EGMAE | 102.13 | - | 1.2 | 1.2 |
| | Medium | Water | - | - | 177.7 | 177.7 |
| | | DPG | - | - | 30.1 | 30.1 |
| | Surfactant | E420 | - | 100 | 2.4 | 2.4 |
| | | P204 | - | 100 | 1.2 | 1.2 |
| | | SFY485 | - | 100 | 2.4 | 2.4 |
| | | LQ1863 | - | 63 | 1.0 | 1.0 |
| | Initiator | VA-061A | - | 20 | 18.0 | 18.0 |
| Conversion rate | | | | | A | A |
| Solid content concentration (% by mass) | | | | | 34.5 | 33.7 |
| Molecular weight | | | Mn | | 13,000 | 21,000 |
| | | | Mw | | 27,000 | 23,000 |

**[Table 6]**

| | | Monomer | | Molecular weight | Example 15 | Example 16 |
|---|---|---|---|---|---|---|
| Monomer composition | Number of parts | a | CTFE | 116.47 | 5.0 | - |
| | | b | C4OLF | 246.01 | 30.0 | 30.0 |
| | | c | AcV | 86.09 | 5.0 | 10.0 |
| | | c | StV | 310.52 | 59.0 | 59.0 |
| | | d | EGMAE | 102.13 | 1.0 | 1.0 |
| | | Total | | | 100.0 | 100.0 |
| Monomer composition | mol% | a | CTFE | 116.47 | 10.2 | - |
| | | b | C4OLF | 246.01 | 28.9 | 27.9 |
| | | c | AcV | 86.09 | 13.7 | 26.5 |
| | | c | StV | 310.52 | 44.9 | 43.4 |
| | | d | EGMAE | 102.13 | 2.3 | 2.2 |
| | | Total | | | 100.0 | 100.0 |
| a + b + c (mol%) | | | | | 97.7 | 97.8 |
| b + c (mol%) | | | | | 87.5 | 97.8 |
| b/c (molar ratio) | | | | | 0.49 | 0.40 |
| Evaluation | Fiber treatment | Ny Taslan | | Initial | 4+ | 2 |
| | | | | HL20 | 1+ | 1 |
| | | Ny high-density taffeta | | Initial | 5- | 3+ |
| | | | | HL20 | 2+ | 2 |

The test cloth using the water and oil repellent composition of Example 15 was superior to that of Example 16 in both initial water repellency (Initial) and water repellency after washing (HL20).

### [Industrial Applicability]

According to the water and oil repellent composition according to one aspect of the present invention, an article with excellent water repellency can be obtained.

According to the method for producing a water and oil repellent composition according to one aspect of the present invention, it is possible to produce a water and oil repellent composition from which an article with excellent water repellency can be obtained.

The article according to one aspect of the present invention is excellent in water repellency.

Priority is claimed on Japanese Patent Application No. 2021-079004, filed May 7, 2021, the content of which is incorporated herein by reference.

## Claims

1. A water and oil repellent composition comprising a polymer comprising a unit based on the following monomer (a), a unit based on the following monomer (b), and a unit based on the following monomer (c),
wherein a total ratio of the unit based on the monomer (a), the unit based on the monomer (b), and the unit based on the monomer (c) with respect to all the units that constitute the polymer is 95 mol% or more,
monomer (a): a compound represented by the following formula (1),
CR¹R²=CR³R⁴ Formula (1),
wherein in Formula (1), R¹ is F, Cl or H, R² is F or H, R³ is F or H, R⁴ is F, H or CF₃, and at least one of R¹ to R⁴ is F,
monomer (b): a compound represented by the following formula (2),
CH₂=CH-R^{f} Formula (2),
wherein in Formula (2), R^{f} is a perfluoroalkyl group having 1 to 6 carbon atoms,
monomer (c): a carboxylic acid vinyl ester.

2. The water and oil repellent composition according to Claim 1,
wherein the polymer further comprises a unit based on the following monomer (d),
monomer (d): another monomer copolymerizable with the monomer (a), the monomer (b) and the monomer (c).

3. The water and oil repellent composition according to Claim 1 or 2,
wherein a total ratio of the unit based on the monomer (b) and the unit based on the monomer (c) with respect to all the units that constitute the polymer is 85 mol% or more and 99 mol% or less.

4. The water and oil repellent composition according to any one of Claims 1 to 3,
wherein a molar ratio of (the unit based on the monomer (b))/( the unit based on the monomer (c)) is 0.20 or more and 0.80 or less.

5. The water and oil repellent composition according to any one of Claims 1 to 4,
wherein a ratio of the unit based on the monomer (a) with respect to all the units that constitute the polymer is 1 mol% or more and 12 mol% or less.

6. The water and oil repellent composition according to any one of Claims 1 to 5,
wherein the monomer (a) is at least one selected from the group consisting of tetrafluoroethylene, trifluoroethylene, chlorotrifluoroethylene and hexafluoropropylene.

7. A method for producing a water and oil repellent composition, the method comprising polymerizing a monomer component in the presence of a polymerization initiator; wherein
the monomer component comprises the following monomer (a), the following monomer (b), and the following monomer (c), and
a total ratio of the monomer (a), the monomer (b), and the monomer (c) with respect to the monomer component is 95 mol% or more,
monomer (a): a compound represented by the following formula (1),
CR¹R²=CR³R⁴ Formula (1),
wherein in Formula (1), R¹ is F, Cl or H, R² is F or H, R³ is F or H, R⁴ is F, H or CF₃, and at least one of R¹ to R⁴ is F,
monomer (b): a compound represented by the following formula (2),
CH₂=CH-R^{f} Formula (2),
wherein in Formula (2), R^{f} is a perfluoroalkyl group having 1 to 6 carbon atoms,
monomer (c): a carboxylic acid vinyl ester.

8. The method according to Claim 7,
wherein the monomer component further comprises the following monomer (d),
monomer (d): another monomer copolymerizable with the monomer (a), the monomer (b) and the monomer (c).

9. The method according to Claim 7 or 8,
wherein a total ratio of the monomer (b) and the monomer (c) with respect to the monomer component is 85 mol% or more and 99 mol% or less.

10. The method according to any one of Claims 7 to 9,
wherein a molar ratio of (the monomer (b))/( the monomer (c)) is 0.20 or more and 0.80 or less.

11. The method according to any one of Claims 7 to 10,
wherein a ratio of the monomer (a) with respect to the monomer component is 1 mol% or more and 12 mol% or less.

12. An article treated with the water and oil repellent composition according to any one of Claims 1 to 6.
